# EUROPEAN PATENT APPLICATION

(11) **EP 4 742 348 A1**
(43) Date of publication of application: **13.05.2026**
(21) Application number: 25790455.7
(22) Date of filing: 11.04.2025
(51) Int. Cl.: H01M 10/04, H01M 10/44, H02J 7/00

(54) **BIDIRECTIONAL PRESSING CHARGING AND DISCHARGING EQUIPMENT AND BATTERY ACTIVATION METHOD USING SAME**

(30) Priority: 18.04.2024 KR 20240052272
(71) Applicant: LG Energy Solution, Ltd., Seoul 07335 (KR)
(72) Inventor: BAE, Hyun Woo, Daejeon 34122 (KR)
(74) Representative: Goddar, Heinz J.
(86) International application number: PCT/KR2025/004981
(87) International publication number: WO 2025/220969

(57) **Abstract**

A bidirectional pressurized charging and discharging facility according to the present disclosure includes a first compression plate arranged in X direction to pressurize a front side of a battery cell; a second compression plate arranged in pairs with the first compression plates to pressurize a rear side of the battery cell; a first ball screw configured to sequentially pass through a plurality of first compression plates along X direction and move the first compression plates in ±X direction by forward and reverse rotation; a second ball screw configured to sequentially pass through a plurality of second compression plates along X direction and move the second compression plates in ±X direction by forward and reverse rotation; a first driving part for providing driving force to rotate the first ball screw; and a second driving part for providing driving force to rotate the second ball screw.

## Description

### [Technical Field]

This application claims the benefit of priority from Korean Patent Application No. 10-2024-0052272, filed on April 18, 2024, the entire contents disclosed therein are incorporated by reference into this disclosure.

The present disclosure relates to a pressurized charging and discharging facility used in the manufacturing process of lithium secondary batteries and an activation method of secondary batteries using the same.

### [Background]

Recently, demand for secondary batteries as eco-friendly energy sources has been rapidly increasing, and among such secondary batteries, lithium secondary batteries that exhibit high energy density and operating potential, have long cycle life, and low self-discharge rate have been commercialized and are widely used.

The lithium secondary battery can be assembled by making an electrode assembly composed of a positive electrode plate and a negative electrode plate coated with positive electrode active material and negative electrode active material, respectively, and a separator interposed between the positive electrode plate and the negative electrode plate, and accommodating and sealing the electrode assembly and electrolyte in a battery case in the form of a metal can or pouch.

Since the secondary battery after completion of the assembly process is in a discharged state, it should be charged to activate the secondary battery to function as a battery. Therefore, an activation process for activation is performed after the secondary battery assembly process.

The activation process may include a formation process of charging the secondary battery to a predetermined depth of charge, an aging process of aging the secondary battery, a degassing process for discharging gas generated during the activation process to the outside of the battery, and the like. Among them, during the formation process, reactions between electrodes and electrolyte occur actively, generating a large amount of gas, and such gas can be trapped between the electrodes and separators. To prevent gas trapping, a charging and discharging facility configured to enable pressurization during formation is used.

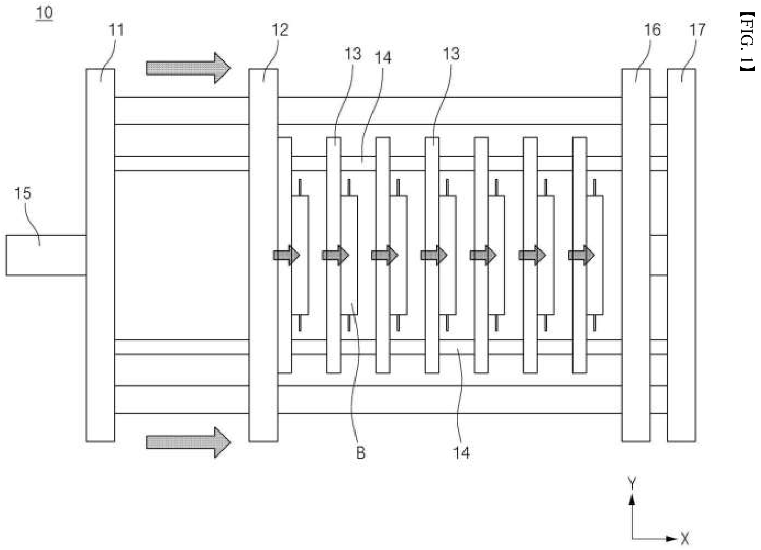

FIG. 1 is a top view of a conventional pressurized charging and discharging facility. Referring to FIG. 1, in the conventional pressurized charging and discharging facility 10, a pressing plate 12 is formed on one side of a plurality of battery cells B, and a wall 16 is formed on the other side, and a plurality of compression plates 13 are arranged side by side along the X direction between them. Battery cells B are interposed between the compression plate 13 and adjacent compression plates 13. In the corner region of the pressing plate 12, screws 14 configured to rotate by receiving driving force from a driving part 15 are coupled through penetration, and by rotation of the screws 14, the pressing plate 12 is configured to be capable of forward and backward movement along the X direction. In other words, when the screws 14 are rotated in the forward or reverse direction, the pressing plate 12 advances and pushes the compression plates 13 in the X direction, thereby the spacing between the compression plates gradually narrows and the battery cells are pressurized. Such pressurized charging and discharging facility 10 can only pressurize in one direction, that is, from the pressing plate 12 toward the wall 16, based on the arrangement direction of the pressing plates 12 (X direction), and pressurization from the wall 16 toward the pressing plate 12 is impossible. In addition, the conventional charging and discharging facility has limitations in increasing pressure as a result of being able to pressurize only in one direction.

Therefore, the conventional charging and discharging facility had problems of not being suitable when bidirectional pressurization is needed or when high pressure should be applied.

### [Summary]

### [Technical Problem]

An object of the present disclosure is to provide a pressurized charging and discharging facility capable of pressurizing battery cells bidirectionally and an activation method of secondary batteries using the same.

### [Technical Solution]

A bidirectional pressurized charging and discharging facility according to exemplary embodiments of the present disclosure is a facility for pressurizing and charging and discharging battery cells, comprising: a first compression plate arranged in X direction to pressurize a front side of a battery cell; a second compression plate arranged in pairs with the first compression plate to pressurize a rear side of the battery cell; a first ball screw configured to sequentially pass through the plurality of first compression plates along X direction and move the first compression plates in ±X direction by forward and reverse rotation; a second ball screw configured to sequentially pass through the plurality of second compression plates along the X direction and move the second compression plates in ±X direction by forward and reverse rotation; a first driving part for providing driving force to rotate the first ball screw; and a second driving part for providing driving force to rotate the second ball screw.

In exemplary embodiments, each first compression plate includes two or more first through-holes for insertion of the first ball screw, each second compression plate includes two or more second through-holes for insertion of the second ball screw, the first through-holes may be formed symmetrically on both sides of the first compression plate, and the second through-holes may be formed symmetrically on both sides of the second compression plate.

In exemplary embodiments, the first through-holes and the second through-holes may each be four in number.

In exemplary embodiments, the first through-holes and the second through-holes may be formed so as not to mutually overlap in Z-Y plane.

In exemplary embodiments, the plurality of first compression plates and the plurality of second compression plates may be arranged alternately along X direction.

The bidirectional pressurized charging and discharging facility according to exemplary embodiments may further comprise a main body part. The main body part includes: a base plate disposed below the plurality of first compression plates and the plurality of second compression plates; a front plate formed on a front side of the base plate based on the X direction; and a rear plate formed on a rear side of the base plate based on the X direction, wherein the plurality of first compression plates and the plurality of second compression plates may be disposed between the front plate and the rear plate.

In exemplary embodiments, based on the X direction, the first driving part may be located on a front side of the front plate, and based on the X direction, the second driving part may be located on a rear side of the rear plate.

In exemplary embodiments, a number of the first ball screws may correspond to a number of the first through-holes, and a number of the second ball screws may correspond to ae number of the second through-holes.

The bidirectional pressurized charging and discharging facility according to exemplary embodiments may be configured such that the plurality of first compression plates and the plurality of second compression plates are configured to move in opposite directions to pressurize both sides of a battery cell.

In exemplary embodiments, the first ball screw may be coupled to the plurality of first compression plates, and the second ball screw may be coupled to the plurality of second compression plates.

In exemplary embodiments, the first driving part may include a first motor for providing driving force and a first rotating gear configured to rotate in forward and reverse directions by the first motor, and the second driving part may include a second motor for providing driving force and a second rotating gear configured to rotate in forward and reverse directions by the second motor.

In exemplary embodiments, one end of the first ball screw may be connected to the first rotating gear, and one end of the second ball screw may be connected to the second rotating gear.

In exemplary embodiments, the first driving part and the second driving part may each be a servo cylinder.

An activation method for secondary batteries according to exemplary embodiments of the present disclosure is an activation method of secondary batteries including a formation process of charging a secondary battery to a predetermined depth of charge, and using the pressurized charging and discharging facility.

### [Advantageous Effects]

The pressurized charging and discharging facility according to exemplary embodiments of the present disclosure can pressurize a front side and a rear side of a battery cell in opposite directions, and can be used when bidirectional pressurization of the battery cell is needed.

The pressurized charging and discharging facility according to exemplary embodiments of the present disclosure has an effect of being capable of simultaneously pressurizing and charging and discharging a plurality of battery cells.

According to exemplary embodiments of the present disclosure, since a first driving part for pressurizing the front side of the battery cell and a second driving part for pressurizing the rear side of the battery cell are respectively provided, there is an effect that high pressure application to the battery cell is possible.

According to exemplary embodiments of the present disclosure, first ball screws are coupled to both sides of a first compression plate for pressurizing the front side of the battery cell, and second ball screws are coupled to both sides of a second compression plate for pressurizing the rear side of the battery cell, so that pressure can be evenly applied to the entire surface of the battery cell.

### [Brief Description of the Drawings]

FIG. 1 is a top view of a conventional pressurized charging facility.
FIG. 2 is an exploded perspective view of a pressurized charging and discharging facility according to exemplary embodiments of the present disclosure.
FIG. 3 is a top view of a pressurized charging and discharging facility according to exemplary embodiments of the present disclosure.
FIG. 4 is a side view of a pressurized charging and discharging facility according to exemplary embodiments of the present disclosure.
FIG. 5 is a front view of a first compression plate and a second compression plate according to exemplary embodiments of the present disclosure.

### [Description of Reference Numerals]

B: battery cell
10,100: pressurized charging and discharging facility
111: first compression plate
113a~113d: first through-hole
112: second compression plate
114a~114d: second through-hole
120: first ball screw
130: second ball screw
140: first driving part
141: first motor
142: first rotating gear
150: second driving part
151: second motor
152: second rotating gear
160: main body part
161: base plate
162: front plate
163: rear plate

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

In this specification, singular expressions include plural expressions unless the context clearly indicates otherwise.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

In this specification, the front side means the left side of X direction, and the rear side means the right side of X direction.

### (first embodiment)

The present disclosure provides a bidirectional pressurized charging and discharging facility (hereinafter referred to as 'pressurized charging and discharging facility') as a first embodiment.

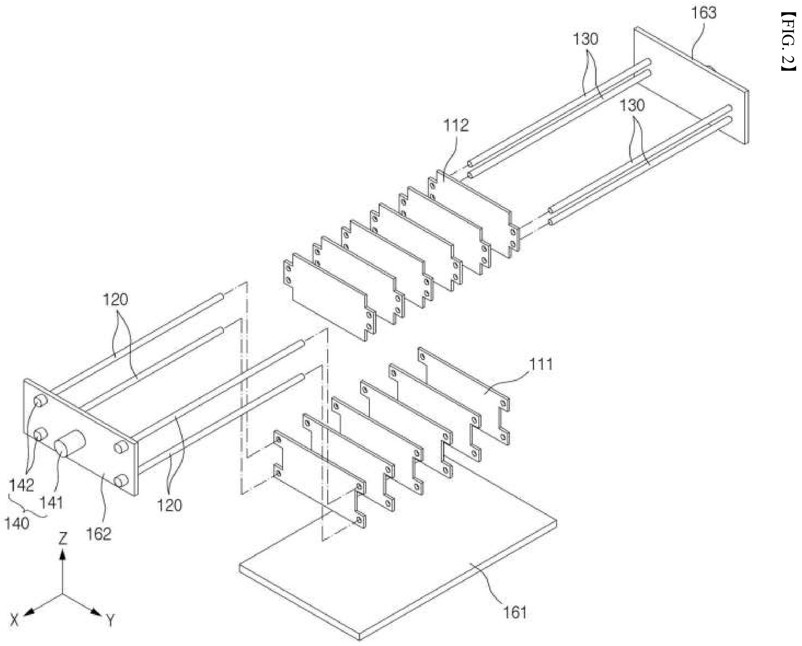

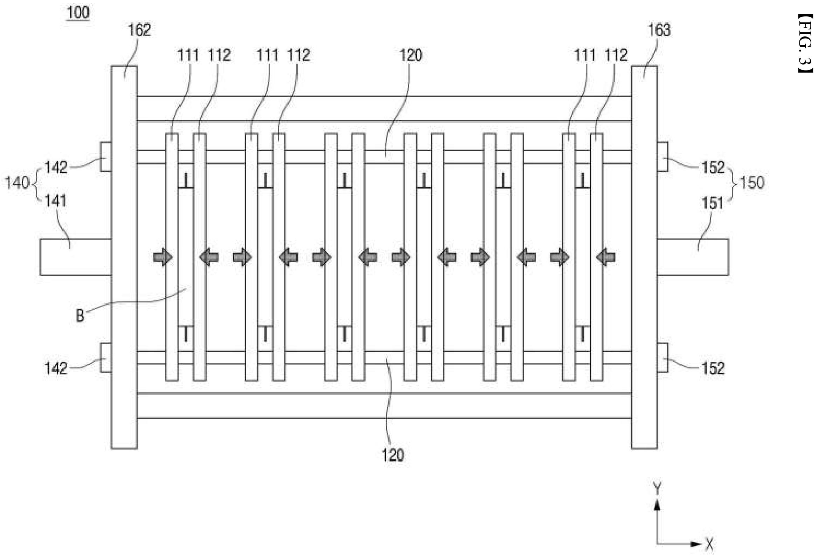

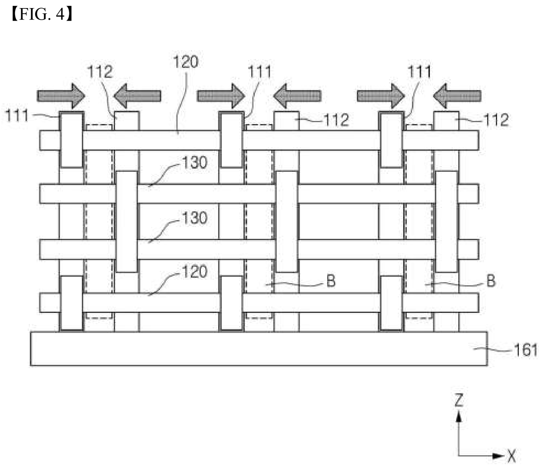

FIG. 2 is an exploded perspective view of a pressurized charging and discharging facility according to exemplary embodiments of the present disclosure, FIG. 3 is a top view of a pressurized charging and discharging facility according to exemplary embodiments of the present disclosure, and FIG. 4 is a side view of a pressurized charging and discharging facility according to exemplary embodiments of the present disclosure.

Referring to these drawings, the pressurized charging and discharging facility 100 according to the present disclosure may include a main body part 161, 162, 163, a first compression plate 111, a second compression plate 112, a first ball screw 120, a second ball screw 130, a first driving part 140, and a second driving part 150.

The pressurized charging and discharging facility 100 according to exemplary embodiments of the present disclosure may further include a control part (not shown), a temperature sensor (not shown), a power supply device related to heating, and interlocking components so that the operation can be performed smoothly, and since the principles of configuring and operating the components correspond to a technical level widely known in the field to which the present disclosure belongs, detailed description is omitted.

The main body part 161, 162, 163 may be a structure for accommodating a plurality of battery cells B inside. In some embodiments, the main body part may include a base plate 161, a front plate 162, and a rear plate 163.

The base plate 161 may be disposed below the first compression plate and the second compression plate 111, 112 based on Z direction. The base plate 161 is a rectangular plate positioned on the bottom surface of the main body part, and the first compression plate and the second compression plate 111, 112 may be installed to be movable on an upper surface of the base plate 161.

The front plate 162 may be a rectangular member positioned on the front side of the base plate 161 based on X direction, which is an arrangement direction of the first compression plate and the second compression plate. In some embodiments, passing holes may be formed symmetrically in the front plate 162 so that a first ball screw 120 to be described later passes through and is coupled to a first rotating gear 142 to be described later.

The rear plate 163 may be a rectangular member positioned on the rear side of the base plate 161 based on X direction. In some embodiments, passing holes may be formed symmetrically in the rear plate 163 so that a second ball screw 130 to be described later passes through and is coupled to a second rotating gear 152 to be described later.

The first and second compression plates 111, 112 may be disposed between the front plate 162 and the rear plate 163.

The first compression plate 111 is for pressurizing the front side of the battery cell B, and may be installed in plurality to pressurize the plurality of battery cells B. A plurality of first compression plates 111 are arranged side by side in X direction.

The second compression plate 112 is for pressurizing the rear side of the battery cell B, and may be installed in plurality to pressurize the plurality of battery cells B. A plurality of second compression plates 112 are arranged side by side in X direction.

The first compression plate 111 and the second compression plate 112 are arranged alternately along X direction, and one battery cell B is interposed between the first compression plate 111 and the second compression plate 112, so that the front side of the battery cell B is pressurized by the first compression plate 111, and the rear side of the battery cell B is pressurized by the second compression plate 112.

In exemplary embodiments, the first compression plate 111 may be provided with two or more first through-holes (not shown) for insertion of the first ball screw 120. To evenly pressurize both sides of the battery cell B, the first through-holes (not shown) may be formed symmetrically on both sides of the first compression plate 111 based on Y direction perpendicular to X direction in the first compression plate 111. The first ball screw 120 is inserted into the first through-holes (not shown) of the first compression plate 111 and coupled to the first compression plate 111, and serves to rotate in forward or reverse directions through driving force of the first driving part 140 to advance or retreat (±X direction) the plurality of first compression plates 111.

The second compression plate 112 may be provided with two or more second through-holes (not shown) for insertion of the second ball screw 130. To evenly pressurize both sides of the battery cell B, the second through-holes may be formed symmetrically on both sides of the second compression plate 112 based on Y direction. The second ball screw 130 is inserted into the second through-holes (not shown) of the second compression plate 112 and coupled to the second compression plate 112, and serves to rotate in forward or reverse directions through driving force of the second driving part 150 to advance or retreat (±X direction) a plurality of second compression plates 112.

The first compression plate 111 and the second compression plate 112 are configured to advance in mutually opposite directions to pressurize the battery cell B. Specifically, the first compression plate 111 may advance or retreat according to a rotation direction of the first ball screw 120, and the second compression plate 112 may advance or retreat according to a rotation direction of the second ball screw 130. For example, the first compression plate 111 may advance in +X direction by rotation of the first ball screw 120 to pressurize the front side of the battery cell B, and the second compression plate 112 may advance in -X direction by rotation of the second ball screw 130 to pressurize the rear side of the battery cell B.

In exemplary embodiments, the first compression plate 111 may have a heating plate (not shown) built-in to transfer heat to the front side of the battery cell. The second compression plate 112 may also have a heating plate (not shown) built-in in the same manner as the first compression plate 111.

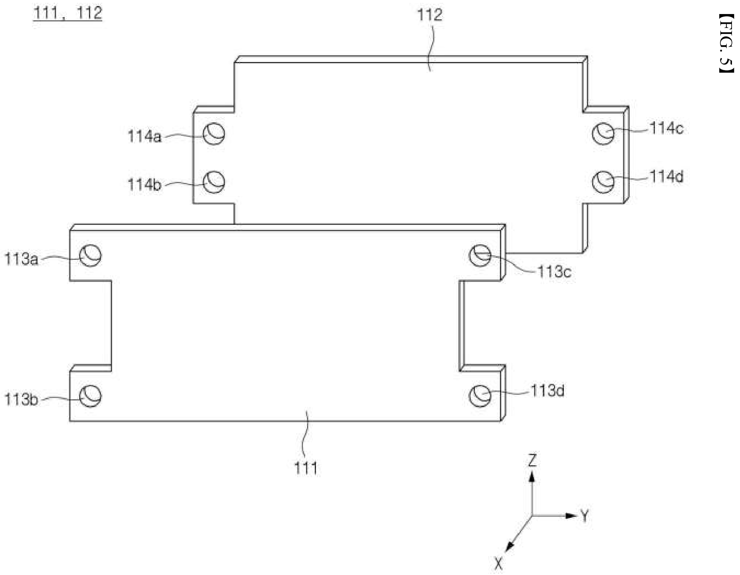

FIG. 5 is a front view of the first compression plate and the second compression plate 111, 112 according to exemplary embodiments of the present disclosure. Referring to FIG. 2 and FIG. 5, the first through-holes 113a~113d formed in the first compression plate 111 and the second through-holes 114a~114d formed in the second compression plate 112 may each be four in number. At this time, the first through-holes 113a~113d are formed symmetrically on both sides of the first compression plate 111, and the second through-holes 114a~114d are formed symmetrically on both sides of the second compression plate 112. Accordingly, when pressurized by the first and second compression plates 111, 112, the battery cell B can receive pressing force from both side portions of the first and second compression plates 111, 112. On the other hand, when through-holes are formed only on one side, the battery cell B can receive pressing force only from one side portion of the first and second compression plates 111, 112. Therefore, as in exemplary embodiments of the present disclosure, when through-holes are formed symmetrically on both sides of compression plates, compared to when through-holes are formed only on one side, pressure can be evenly applied to the entire surface of the battery cell B.

To prevent the first ball screw 120 inserted into the first through-holes 113a~113d and the second ball screw 130 inserted into the second through-holes 114a~114d from mutually interfering with each other, the first through-holes 113a~113d and the second through-holes 114a~114d are formed so as not to mutually overlap in Z-Y plane.

Referring to FIG. 4, as the first ball screw 120 and the second ball screw 130 are in positions where they do not mutually interfere, the first compression plate 111 advances toward the front side of the battery cell B by rotation of the first ball screw 120, and the second compression plate 112 advances toward the rear side of the battery cell by rotation of the second ball screw 130.

In some embodiments, the first through-holes 113a~113d may be provided at corner portions of the first compression plate 111, and the second through-holes 114a~114d may be provided at portions that do not overlap with the first through-holes 113a~113d in Z-Y plane of the second compression plate 112.

The first ball screw 120 is configured to sequentially pass through a plurality of first compression plates 111 along X direction and move the first compression plates 111 in ±X direction by forward and reverse rotation, and the second ball screw 130 is configured to sequentially pass through a plurality of second compression plates 112 along X direction and move the second compression plates 112 in ±X direction by forward and reverse rotation.

Referring to FIG. 2 to FIG. 5, the number of the first ball screws 120 corresponds to the number of the first through-holes 113a~113d, and the number of the second ball screws 130 corresponds to the number of the second through-holes 114a~114d. Four first ball screws 120 are inserted into four first through-holes 113a~113d, and rotate through driving force of the first driving part 140 to advance/retreat the first compression plates 111 coupled to the first ball screws 120. Four second ball screws 130 are inserted into four second through-holes 114a~114d, and rotate through driving force of the second driving part 150 to advance/retreat the second compression plates 112 coupled to the second ball screws 130.

As in exemplary embodiments of the present disclosure, when there are four first and second ball screws 120, 130 each, compared to when there are two first and second ball screws 120, 130 each, there is an effect that even pressure application to the entire surface of the battery cell B is possible.

The first driving part 140 is provided to provide driving force for the first ball screw 120 to rotate, and the second driving part 150 is provided to provide driving force for the second ball screw 130 to rotate. The first driving part 140 provides driving force when pressurizing the front side of the battery cell B by the first compression plate 111, and the second driving part 150 provides driving force when pressurizing the rear side of the battery cell B by the second compression plate 112.

According to exemplary embodiments of the present disclosure, since a first driving part 140 for pressurizing the front side of the battery cell B and a second driving part 150 for pressurizing the rear side of the battery cell B are respectively provided, compared to a pressurized charging and discharging facility provided with one driving part, there is an effect that high pressure application to the battery cell B is possible.

In addition, a pressurized charging and discharging facility with one driving part cannot perform bidirectional pressurization when the driving part fails, but the pressurized charging and discharging facility according to the present disclosure has an advantage that even if one of the first driving part 140 and the second driving part 150 fails, bidirectional pressurization is possible by fixing a motor shaft of the failed driving part and driving the non-failed driving part.

Moreover, in the pressurized charging and discharging facility 100 according to the present disclosure, the first ball screw 120 rotating for front pressurization and the second ball screw 130 rotating for rear pressurization are separated, and the first driving part 140 and the second driving part 150 providing driving force to each of them are separated, so resistance does not increase during rotation of the first ball screw 120 and the second ball screw 130, reducing position deviation.

In exemplary embodiments, the first driving part 140 may be provided on a front side of the front plate 162 based on X direction, and the second driving part 150 may be provided on a rear side of the rear plate 163 based on X direction.

In exemplary embodiments, the first driving part 140 may include: a first motor 141 for providing driving force; and a first rotating gear 142 configured to rotate in forward and reverse directions by the first motor 141, and the second driving part 150 may include: a second motor 151 for providing driving force; and a second rotating gear 152 configured to rotate in forward and reverse directions by the second motor 151.

In exemplary embodiments, one end of the first ball screw 120 is connected to the first rotating gear 142. Therefore, when the first rotating gear 141 rotates by driving force applied from the first motor 141, the first ball screw 120 rotates in interlocking therewith. Also, one end of the second ball screw 130 is connected to the second rotating gear 152. Therefore, when the second rotating gear 152 rotates by driving force applied from the second motor 151, the second ball screw 120 rotates through interlocking with it.

In exemplary embodiments, the first driving part 140 and the second driving part 150 may each be a servo cylinder. A servo cylinder is equipment where a motor and a reducer are combined to convert rotational movement of the motor to linear movement through the reducer and ball screw, and the specific type is not limited.

In exemplary embodiments, the pressurized charging and discharging facility 100 may further include a charging and discharging part (not shown) for charging or charging and discharging battery cells. The charging and discharging part may be configured to be connected to electrode leads of battery cells to apply charging current or charging and discharging current to the battery cells.

In exemplary embodiments, the pressurized charging and discharging facility 100 may include a sensor (not shown) configured to measure any one or two or more of temperature, voltage, resistance, current, etc. of battery cells. During charging or charging and discharging, measurement information from the sensor is monitored in real time, and pressurization and charging and discharging can be controlled under optimized conditions.

In exemplary embodiments, the pressurized charging and discharging facility 100 may further include a position adjusting part (not shown). In some embodiments, the position adjusting part may be installed on an upper portion of the base plate 161 based on Z direction, and configured to fix the battery cell B disposed between the first compression plate 111 and the second compression plate 112 in a correct position state.

The above-described pressurized charging and discharging facility 100 may be used in an activation process of secondary batteries, specifically in a formation process of secondary batteries. The secondary battery to which the pressurized charging and discharging facility 100 of the present disclosure is applied may be a pouch-type secondary battery.

The pressurized charging and discharging facility 100 according to embodiments of the present disclosure can pressurize the front side and rear side of battery cells bidirectionally, and can pressurize battery cells at higher pressure compared to conventional unidirectional pressurized charging and discharging facilities.

(second embodiment)

The present disclosure provides an activation method of secondary batteries (hereinafter referred to as 'activation method') as a second embodiment.

The activation method according to exemplary embodiments of the present disclosure uses the above-described pressurized charging and discharging facility 100. For example, the pressurized charging and discharging facility 100 may include: a first compression plate 111 arranged in X direction to pressurize a front side of the battery cell B; a second compression plate 112 arranged in pairs with the first compression plate 111 to pressurize a rear side of the battery cell B; a first ball screw 120 configured to sequentially pass through a plurality of first compression plates 111 along X direction and move the first compression plates 111 in ±X direction by forward and reverse rotation; a second ball screw 130 configured to sequentially pass through a plurality of second compression plates 112 along X direction and move the second compression plates 112 in ±X direction by forward and reverse rotation; a first driving part 140 for providing driving force to rotate the first ball screw 120; and a second driving part 150 for providing driving force to rotate the second ball screw 130.

Since the pressurized charging and discharging facility 100, the first and second compression plates 111, 112, the first and second ball screws 120, 130, and the first and second driving parts 140, 150 have been described in detail above, redundant description will be omitted.

The activation method according to exemplary embodiments of the present disclosure may include a formation process of charging secondary batteries to a predetermined depth of charge. After the formation process, an aging process of aging secondary batteries and a degassing process for discharging gas generated by electrode and electrolyte reactions during the activation process to the outside of the battery may be performed.

The formation process is a process of performing initial charging on lithium secondary batteries to activate them, and the formation process according to exemplary embodiments may include a process of charging lithium secondary batteries until reaching a predetermined depth of charge (DOC). When charging lithium secondary batteries, to prevent gas trapping and mitigate swelling phenomenon of electrodes, the formation process may include a process of pressurizing lithium secondary batteries simultaneously with charging lithium secondary batteries and/or before charging lithium secondary batteries and/or after charging lithium secondary batteries.

When the above-described pressurized charging and discharging facility is used in the pressurizing process, the front side and rear side of secondary batteries can be pressurized in mutually opposite directions.

During formation of lithium secondary batteries, lithium ions from the positive electrode move to the negative electrode and are intercalated, and at this time, a solid electrolyte interface (SEI) film is formed on the negative electrode surface. At this time, lithium ions released from the lithium metal layer may also be intercalated into the negative electrode and consumed in SEI film formation.

Once the SEI film is formed, it performs the role of ion tunnel to allow only lithium ions to pass through. With the effect of such ion tunnel, lithium ions are solvated, thereby preventing large molecular weight organic solvent molecules that move together with lithium ions in electrolyte, for example, lithium salt, EC, DMC or DEC, etc., from being intercalated together into graphite negative electrodes and causing structural collapse of negative electrodes. Once the SEI film is formed, lithium ions no longer have side reactions with graphite negative electrodes or other materials, and the charge amount consumed in the SEI film formation has characteristics of irreversible capacity that does not react reversibly during discharge. Therefore, no further decomposition of electrolyte occurs and the amount of lithium ions in electrolyte is maintained reversibly, so stable charging and discharging can be maintained. In conclusion, once the SEI film is formed, the amount of lithium ions is maintained reversibly, and the lifespan characteristics of the battery are also improved.

The depth of charge for terminating charging in the formation process may be set within a range of 20% (SOC 20%) to 80% (SOC 80%) of lithium secondary battery capacity (SOC 100%), may be set within a range of SOC 30% to SOC 80%, or may be set within a range of SOC 40% to SOC 80%, or within a range of SOC 50% to SOC 75%. This may be appropriately selected according to material characteristics, capacity, etc. of lithium secondary batteries.

Charging conditions in the formation process may be performed according to conditions known in the art. Specifically, the charging method may perform charging by a constant current method until reaching the charge termination depth of charge. However, it is not limited thereto.

At this time, the charging rate (c-rate) may be 0.01C to 2C, may be 0.1C to 1.5C, may be 0.2C to 1C, and is preferably a low rate charging rate of 1.0C or less. Since not only lithium of the positive electrode but also lithium in the lithium metal layer moves to the negative electrode during the formation process, the smaller the charging rate in the formation process, the more uniformly the SEI film can be formed, which is preferable.

In one embodiment, the formation process may charge in 1-Step without rest periods until reaching the depth of charge for terminating charging, and may perform the initial charging process by dividing the initial charging process into a plurality of steps until reaching the set depth of charge, changing charging conditions and pressurization conditions for each step.

In the formation process, temperature may be controlled through temperature control of the first and second compression plates. For example, heating members such as heating wires built into the first and second compression plates apply heat to the first and second compression plates, and the heat applied to the first and second compression plates may be transferred to secondary batteries.

Meanwhile, before the formation process of the present disclosure, a pre-aging process may be performed on pouch-type secondary batteries to allow electrolyte to be sufficiently impregnated into electrode assemblies.

The pre-aging process is a process of waiting for electrolyte of assembled lithium secondary batteries to be sufficiently impregnated into electrode assemblies, and is preferably performed before the formation process.

After accommodating electrode assemblies and electrolyte in battery cases, for electrode reactions by the formation process to proceed, electrolyte must be sufficiently impregnated into positive electrodes, negative electrodes, and separators constituting electrode assemblies in advance. When the formation process is performed in a state where electrolyte is not impregnated, uncharged regions may occur, and accordingly SEI films are not formed uniformly, which may cause deterioration of battery performance.

The pre-aging process may be leaving assembled lithium secondary batteries for 12 hours to 48 hours in a temperature range of 18 degrees Celsius to 27 degrees Celsius, and the temperature range may be 18 degrees Celsius to 27 degrees Celsius, preferably 19 degrees Celsius to 26 degrees Celsius, and more preferably 20 degrees Celsius to 25 degrees Celsius. Also, the performance time of the pre-aging process may be 12 hours to 48 hours, and preferably 18 hours to 36 hours.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A bidirectional pressurized charging and discharging facility, for pressurizing and charging/discharging a battery cell, comprising:
a first compression plate arranged in X direction to pressurize a front side of a battery cell;
a second compression plate arranged in pairs with the first compression plates to pressurize a rear side of the battery cell;
a first ball screw configured to sequentially pass through the plurality of first compression plates along the X direction and move the first compression plates in ±X direction by forward and reverse rotation;
a second ball screw configured to sequentially pass through the plurality of second compression plates along the X direction and move the second compression plates in ±X direction by forward and reverse rotation;
a first driving part for providing driving force to rotate the first ball screw; and
a second driving part for providing driving force to rotate the second ball screw.

2. The bidirectional pressurized charging and discharging facility of claim 1, wherein each first compression plate includes two or more first through-holes for insertion of the first ball screw,
each second compression plate includes two or more second through-holes for insertion of the second ball screw,
the first through-holes are formed symmetrically on both sides of the first compression plate, and
the second through-holes are formed symmetrically on both sides of the second compression plate.

3. The bidirectional pressurized charging and discharging facility of claim 2, wherein the first through-holes and the second through-holes are each four in number.

4. The bidirectional pressurized charging and discharging facility of claim 2, wherein the first through-holes and the second through-holes are formed so as not to mutually overlap in Z-Y plane.

5. The bidirectional pressurized charging and discharging facility of claim 1, wherein the plurality of first compression plates and the plurality of second compression plates are arranged alternately along the X direction.

6. The bidirectional pressurized charging and discharging facility of claim 1, further comprising a main body part,
wherein the main body part comprises:
a base plate disposed below the plurality of first compression plates and the plurality of second compression plates;
a front plate formed on a front side of the base plate based on the X direction; and
a rear plate formed on a rear side of the base plate based on the X direction,
and the plurality of first compression plates and the plurality of second compression plates are disposed between the front plate and the rear plate.

7. The bidirectional pressurized charging and discharging facility of claim 6, wherein based on the X direction, the first driving part is located on a front side of the front plate, and
based on the X direction, the second driving part is located on a rear side of the rear plate.

8. The bidirectional pressurized charging and discharging facility of claim 2, wherein a number of the first ball screws corresponds to a number of the first through-holes, and
a number of the second ball screws corresponds to a number of the second through-holes.

9. The bidirectional pressurized charging and discharging facility of claim 1, wherein the plurality of first compression plates and the plurality of second compression plates are configured to move in opposite directions to pressurize both sides of a battery cell.

10. The bidirectional pressurized charging and discharging facility of claim 1, wherein the first ball screw is coupled to the plurality of first compression plates, and
the second ball screw is coupled to the plurality of second compression plates.

11. The bidirectional pressurized charging and discharging facility of claim 1, wherein the first driving part comprises a first motor for providing driving force and a first rotating gear configured to rotate in forward and reverse directions by the first motor, and
the second driving part comprises a second motor for providing driving force and a second rotating gear configured to rotate in forward and reverse directions by the second motor.

12. The bidirectional pressurized charging and discharging facility of claim 10, wherein one end of the first ball screw is connected to the first rotating gear, and
one end of the second ball screw is connected to the second rotating gear.

13. The bidirectional pressurized charging and discharging facility of claim 1, wherein the first driving part and the second driving part are each a servo cylinder.

14. An activation method for secondary batteries comprising a formation process of charging a secondary battery to a predetermined depth of charge, **characterized by** using the pressurized charging and discharging facility according to claim 1.
